# EUROPEAN PATENT APPLICATION

(11) **EP 4 095 571 A1**
(43) Date of publication of application: **30.11.2022**
(21) Application number: 21759693.1
(22) Date of filing: 18.02.2021
(51) Int. Cl.: G02B 1/115, G02B 1/14, G03B 11/04

(54) **LENS, CAMERA MODULE, AND ELECTRONIC DEVICE**

(30) Priority: 25.02.2020 CN 202010117747
(71) Applicant: Huawei Technologies Co., Ltd., Shenzhen, Guangdong 518129 (CN)
(72) Inventor: YUAN, Jun, Shenzhen, Guangdong 518129 (CN); YU, Feng, Shenzhen, Guangdong 518129 (CN); YE, Haishui, Shenzhen, Guangdong 518129 (CN)
(74) Representative: Gill Jennings & Every LLP
(86) International application number: PCT/CN2021/076677
(87) International publication number: WO 2021/169823

(57) **Abstract**

Embodiments of this application provide a lens assembly, a camera module, and an electronic device. The electronic device may include a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), a wearable device, a virtual reality device, a wireless USB flash drive, a Bluetooth speaker/headset, or a mobile or fixed terminal for image shooting, for example, a factory-installed terminal. Low refractive index film layers with gradually decreasing refractive indexes are disposed on a substrate of a lens, so that reflection of incident light on a surface of the lens is reduced, a low reflectivity of the lens within a large incident angle range is implemented, a good anti-glare effect of the lens within a large angle range is ensured, and image quality of the camera module is improved.

## Description

This application claims priority to Chinese Patent Application No. 202010117747.0, filed with the China National Intellectual Property Administration on February 25, 2020 and entitled "LENS ASSEMBLY, CAMERA MODULE, AND ELECTRONIC DEVICE", which is incorporated herein by reference in its entirety.

### TECHNICAL FIELD

Embodiments of this application relate to the field of terminal technologies, and in particular, to a lens assembly, a camera module, and an electronic device.

### BACKGROUND

With continuous development of smartphones, an image shooting function is an indispensable function for an electronic device (for example, a mobile phone or a tablet computer). To obtain good image quality and a good image shooting effect, a plurality of camera modules are disposed on the electronic device to provide various image shooting functions.

Currently, a camera apparatus mainly includes a lens assembly, a holder base, a light filter, a photosensitive element, and a flexible printed circuit (FPC). The lens assembly includes a lens tube and a lens group disposed in the lens tube. The lens group usually includes a plurality of lenses. For example, as a requirement on image quality of the camera module is continuously improved, a quantity of lenses in the lens assembly continuously increases, and develops from 3P (that is, three lenses) and 4P (four lenses) to 6P (six lenses) and 7P (seven lenses). When light passes through a lens in the lens assembly, reflection occurs on a surface of the lens and surfaces of two adjacent lenses, and finally ghosts and glare are formed on a sensor. As the quantity of lenses continuously increases, reflective surfaces also continuously increase, and imaging quality of the camera module is severely affected. Therefore, a plurality of layers of coated films are used on the lens to prevent glare. Specifically, a plurality of high refractive index film layers and low refractive index film layers that are alternately arranged are disposed on the lens, and the high refractive index film layers and the low refractive index film layers are alternately arranged to generate interference cancellation to reduce reflection.

Then, when the high refractive index film layers and the low refractive index film layers are alternately arranged, interference cancellation is achieved to reduce reflection only when an optical path difference meets a requirement. In this way, the lens can implement a low surface reflectivity at one of incident angles (for example, an incident angle is 0°, and incident light is vertically incident), but cannot implement a low surface reflectivity at a large angle at the same time. Therefore, effectively reducing the surface reflectivity of the lens becomes an urgent requirement.

### SUMMARY

This application provides a lens assembly, a camera module, and an electronic device, to reduce reflection of incident light on a surface of a lens, implement a low reflectivity of the lens within a large incident angle range, ensure a good anti-glare effect of the lens within a large angle range, and improve imaging quality of the camera module.

According to a first aspect of this application, a lens assembly is provided, and includes a lens tube and a plurality of lenses disposed in the lens tube.

At least some of the lenses each include a substrate. The substrate has a first surface facing an object side and a second surface facing an image side. At least one low refractive index film layer is disposed on at least one of the first surface and the second surface. A refractive index of the substrate and a refractive index of the low refractive index film layer gradually decrease in a direction from the substrate to the low refractive index film layer.

According to the lens assembly provided in this embodiment of this application, at least some of the lenses each include the substrate, the substrate has the first surface facing the object side and the second surface facing the image side, the at least one low refractive index film layer is disposed on at least one of the first surface and the second surface, and the refractive index of the substrate and the refractive index of the low refractive index film layer gradually decrease in the direction from the substrate to the low refractive index film layer. This reduces a reflectivity of a surface of a lens for incident light, makes ghosts and glare difficult to form, and ensures that the lens assembly achieves low reflection and anti-glare. Therefore, according to the lens assembly provided in this embodiment of this application, the reflectivity of the surface of the lens is reduced, and a low reflectivity of the lens within a large incident angle range is implemented. Compared with the current technology, this ensures a good anti-glare effect of the lens within a large angle range, and improves imaging quality of the camera module.

In a possible implementation, a first low refractive index film layer and a second low refractive index film layer are stacked on at least one of the first surface and the second surface, the first low refractive index film layer is located between the substrate and the second low refractive index film layer, and refractive indexes of the substrate, the first low refractive index film layer, and the second low refractive index film layer gradually decrease.

In a possible implementation, the first low refractive index film layer and the second low refractive index film layer are stacked on each of the first surface and the second surface, the first low refractive index film layer is located between the substrate and the second low refractive index film layer, and the refractive indexes of the substrate, the first low refractive index film layer, and the second low refractive index film layer gradually decrease.

In a possible implementation, a difference between the refractive indexes of the first low refractive index film layer and the second low refractive index film layer is greater than a difference between the refractive index of the substrate and the refractive index of the first low refractive index film layer.

In a possible implementation, the difference between the refractive index of the substrate and the refractive index of the first low refractive index film layer is less than 0.25, and the difference between the refractive indexes of the first low refractive index film layer and the second low refractive index film layer is less than 0.4.

In a possible implementation, the refractive index of the substrate is less than or equal to 1.7.

In a possible implementation, the substrate is a glass substrate, a plastic substrate, or a resin substrate.

In a possible implementation, the first low refractive index film layer and the second low refractive index film layer are made of silicon dioxide or porous silicon oxide.

In a possible implementation, a thickness of each of the low refractive index film layers ranges from 80 to 150 nm, and a total thickness of the low refractive index film layers disposed on the first surface or the second surface is less than 300 nm.

In a possible implementation, the plurality of lenses includes a first lens close to the object side, a second lens close to the image side, and at least one middle lens located between the first lens and the second lens. At least two of the low refractive index film layers are disposed on the first surface or the second surface of each of at least some of the first lens, the middle lens, and the second lens, or at least two of the low refractive index film layers are disposed on each of the first surface and the second surface of each of at least some of the first lens, the middle lens, and the second lens.

In a possible implementation, the lens assembly further includes a transparent protective layer. The at least one low refractive index film layer is located between the protective layer and the substrate.

In a possible implementation, a refractive index of the protective layer ranges from 1.4 to 1.6.

In a possible implementation, a thickness of the protective layer ranges from 1 to 20 nm, and the protective layer is a film layer made of silicon dioxide or magnesium fluoride.

According to a second aspect of this embodiment of this application, a camera module is provided, and includes at least the lens assembly, a holder, a photosensitive element, and a flexible printed circuit. The holder is located between the lens assembly and the flexible printed circuit. The photosensitive element is located at one end that is of the flexible printed circuit and opposite to the lens assembly.

The lens assembly is included, so that a reflectivity of a surface of a lens is reduced, a low reflectivity of the lens within a large incident angle range is implemented, a good anti-glare effect of the lens within a large angle range is ensured, and imaging quality of the camera module is improved.

According to a third aspect of this embodiment of this application, an electronic device is provided, and includes a display, a rear cover, and at least one camera module. The camera module faces the display or faces the rear cover.

The camera module is included, so that a reflectivity of a surface of a lens is reduced, a low reflectivity of the lens within a large incident angle range is implemented, a good anti-glare effect of the lens within a large angle range is ensured, and an image shooting effect of the electronic device is improved.

In a possible implementation, the camera module is a front-facing camera module, or the camera module is a rear-facing camera module, or there are at least two camera modules, one camera module is a rear-facing camera module, and the other camera module is a front-facing camera module.

### BRIEF DESCRIPTION OF DRAWINGS

FIG. 1 is a schematic diagram of a structure of an electronic device according to an embodiment of this application;
FIG. 2 is a schematic diagram of an exploded structure of an electronic device according to an embodiment of this application;
FIG. 3 is a schematic diagram of a structure of a front-facing camera module in an electronic device according to an embodiment of this application;
FIG. 4 is a schematic diagram of an exploded structure of a front-facing camera module in an electronic device according to an embodiment of this application;
FIG. 5 is a schematic diagram of an internal structure of a lens assembly in a front-facing camera module in an electronic device according to an embodiment of this application;
FIG. 6 is a schematic cross-sectional diagram obtained after a substrate and a low refractive index film layer in a lens are split according to an embodiment of this application;
FIG. 7 is a schematic diagram of a cross-sectional structure of a lens according to an embodiment of this application;
FIG. 8 is another schematic diagram of a cross-sectional structure of a lens according to an embodiment of this application;
FIG. 9 is another schematic cross-sectional diagram obtained after a substrate and a low refractive index film layer in a lens are split according to an embodiment of this application;
FIG. 10 is still another schematic diagram of a cross-sectional structure of a lens according to an embodiment of this application;
FIG. 11 is yet another schematic diagram of a cross-sectional structure of a lens according to an embodiment of this application;
FIG. 12a is a schematic diagram of a cross-sectional structure of each lens in a lens assembly in an electronic device according to an embodiment of this application;
FIG. 12b is another schematic diagram of a cross-sectional structure of each lens in a lens assembly in an electronic device according to an embodiment of this application;
FIG. 12c is still another schematic diagram of a cross-sectional structure of each lens in a lens assembly in an electronic device according to an embodiment of this application;
FIG. 13 is a curve diagram of a reflectivity of a lens at different incident angles according to Scenario 1 of this application;
FIG. 14 is a curve diagram of a reflectivity of a lens at different incident angles according to Scenario 2 of this application;
FIG. 15 is a curve diagram of a reflectivity of a lens at an incident angle of 0° according to Scenario 3 of this application;
FIG. 16 is a curve diagram of a reflectivity of a lens at an incident angle of 30° according to Scenario 3 of this application;
FIG. 17 is a curve diagram of a reflectivity of a lens at different incident angles according to Scenario 4 of this application; and
FIG. 18 is a curve diagram of a reflectivity of a lens at different incident angles according to Scenario 5 of this application.

Descriptions of reference numerals:
100-Mobile phone; 10-Display; 11-Hole; 20a-Front-facing camera module; 20b-Rear-facing camera module; 21-Lens assembly; 212-Lens tube; 211-Lens; 2111-First lens; 2112, 2112a, 2112b, and 2112c-Middle lenses; 2113-Second lens; 22-Light filter; 23-Holder; 24-Photosensitive element; 25-Flexible printed circuit; 26-Connector; 30-Middle frame; 31-Frame; 32-Metal middle plate; 40-Circuit board; 50-Battery; 60-Rear cover; 201-Substrate; 2011-First surface; 2012-Second surface; 202-Low refractive index film layer; 2021-First low refractive index film layer; 2022-Second low refractive index film layer; and 203-Protective layer.

### DESCRIPTION OF EMBODIMENTS

Terms used in implementations of this application are merely used to explain specific embodiments of this application, but are not intended to limit this application. The following describes implementations of embodiments of this application in detail with reference to the accompanying drawings.

An electronic device provided in embodiments of this application may include but is not limited to a mobile or fixed terminal having an image shooting function such as a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), an event data recorder, or a security device.

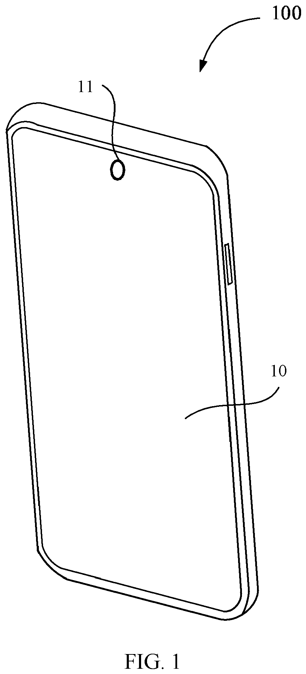

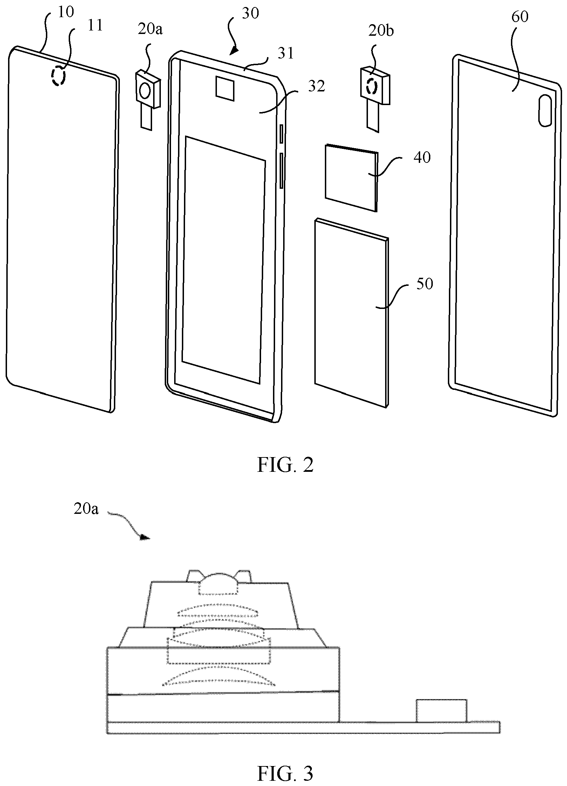

In this embodiment of this application, an example in which the mobile phone is the foregoing electronic device is used for descriptions. FIG. 1 and FIG. 2 respectively show an overall structure and a split structure of the mobile phone. A display of a mobile phone 100 provided in this embodiment of this application may be a dewdrop screen, a notched screen, a bezel-less screen, or a hole-punch screen (referring to FIG. 1). In the following descriptions, the hole-punch screen is used as an example for descriptions. Refer to FIG. 2. The mobile phone 100 may include a display 10 and a rear cover 60. A middle frame 30, a circuit board 40, and a battery 50 may be disposed between the display 10 and the rear cover 60. The circuit board 40 and the battery 50 may be disposed on the middle frame 30. For example, the circuit board 40 and the battery 50 are disposed on a surface that is of the middle frame 30 and that faces the rear cover 60, or the circuit board 40 and the battery 50 may be disposed on a surface that is of the middle frame 30 and that faces the display 10.

The battery 50 may be connected to a charging management module and the circuit board 40 by using a power management module. The power management module receives input of the battery 50 and/or the charging management module, and supplies power to a processor, an internal memory, an external memory, the display 10, a camera module, a communications module, and the like. The power management module may be further configured to monitor parameters such as a capacity of the battery 50, a cycle count of the battery 50, and a state of health (electric leakage and impedance) of the battery 50. In some other embodiments, the power management module may alternatively be disposed in a processor of the circuit board 40. In some other embodiments, the power management module and the charging management module may alternatively be disposed in a same component.

The display 10 may be an organic light-emitting diode (Organic Light-Emitting Diode, OLED) display, or may be a liquid crystal display (Liquid Crystal Display, LCD).

The rear cover 60 may be a rear metal cover, or may be a rear glass cover, or may be a rear plastic cover, or may be a rear ceramic cover. A material of the rear cover 60 is not limited in this embodiment of this application.

The middle frame 30 may include a middle metal plate 32 and a frame 31. The frame 31 is disposed around a periphery of the middle metal plate 32. Usually, the frame 31 may include a top border, a bottom border, a left border, and a right border. The top border, the bottom border, the left border, and the right border form the frame 31 with a square ring structure. The middle metal plate 32 may be an aluminum plate, or may be an aluminum alloy, or may be a magnesium alloy. The frame 31 may be a metal frame, or may be a ceramic frame. The middle metal frame 30 and the frame 31 may be clamped, welded, glued, or integrally formed, or the middle metal frame 30 and the frame 31 are fixedly connected through injection molding.

It should be noted that, in some examples, the rear cover 60 of the mobile phone 100 may be connected to the frame 31 to form a unibody (Unibody) rear cover. For example, the mobile phone 100 may include the display 10, the middle metal plate 32, and a battery cover. The battery cover may be the unibody (Unibody) rear cover including the side frame 31 and the rear cover 60. In this way, the circuit board 40 and the battery 50 are located in space enclosed by the middle metal frame 30 and the battery cover.

To implement an image shooting function, the mobile phone 100 may further include a camera module. The camera module may include a front-facing camera module 20a and a rear-facing camera module 20b. The rear-facing camera module 20b may be disposed on a surface that is of the metal middle plate 32 and that faces the rear cover 60, a hole 11 is provided on the display 10, and a lens of the rear-facing camera module 20b corresponds to the hole 11. Amounting hole that can be used to mount the rear-facing camera module 20b is provided on the rear cover 60. Certainly, the rear-facing camera module 20b may alternatively be mounted on a surface that is of the rear cover 60 and that faces the metal middle plate 32. The front-facing camera module 20a may be disposed on a surface that is of the metal middle plate 32 and that faces the display 10, or the front-facing camera module 20a may be disposed on the surface that is of the metal middle plate 32 and that faces the rear cover 60, or the front-facing camera module 20a may be disposed on a surface that is of the rear cover 60 and that faces the display 10. An opening that can be used to expose a lens end of the front-facing camera module 20a is disposed on the metal middle plate 32. In embodiments of this application, locations on which the front-facing camera module 20a and the rear-facing camera module 20b are disposed include but are not limited to the foregoing descriptions. In some embodiments, one or N front-facing camera modules 20a and rear-facing cameras 20b may be disposed in the mobile phone 100, where N is a positive integer greater than 1.

It may be understood that the structure illustrated in embodiments of this application does not constitute a specific limitation on the mobile phone 100. In other embodiments of this application, the mobile phone 100 may include more or fewer components than those shown in the figure, or some components may be combined, or some components may be split, or there may be a different component layout. The components shown in the figure may be implemented by hardware, software, or a combination of software and hardware.

Based on the foregoing descriptions, in this embodiment of this application, the front camera module 20a is used as an example for descriptions.

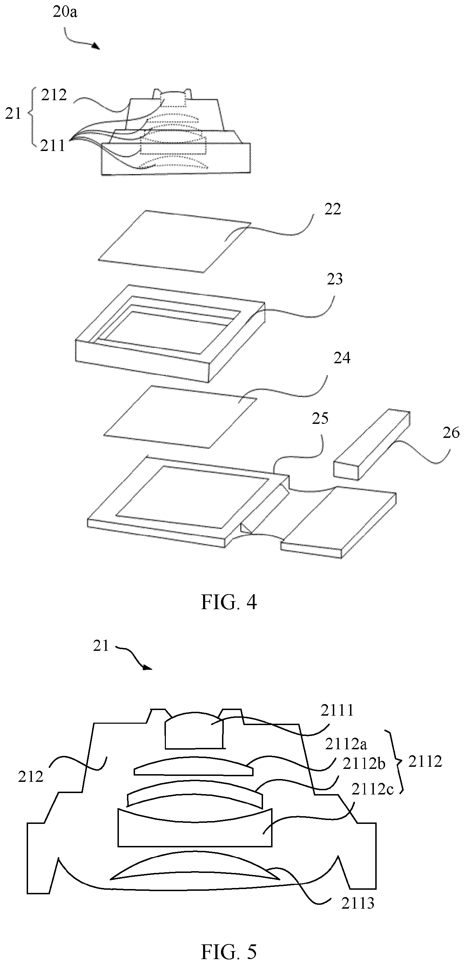

Refer to FIG. 3 and FIG. 4. The front-facing camera module 20a may include a lens assembly 21, a light filter 22 (Filter), a holder 23 (Holder), a photosensitive element 24, a flexible printed circuit (Flexible Printed Circuit, FPC) 25, and a connector 26. The lens assembly 21 is connected to one end of the holder 23. The other end of the holder 23 is fastened to one end of the flexible printed circuit 25. The connector 26 is fastened to the other end of the flexible printed circuit 25. The connector 26 electrically connects the flexible printed circuit 25 to the circuit board 40. The holder 23 and a bottom of the lens assembly 21 may be connected through welding, clamping, bonding, or threaded connection. The holder 23 is fixedly connected to the flexible printed circuit 40 in an adhesive manner, in a clamping manner, or in a welding manner. The holder 23 may be made of plastic or metal. It should be noted that the front-facing camera module 20a shown in FIG. 3 is a camera module with a fixed focal length. When the front-facing camera module 20a is a camera module with a variable focal length, the front-facing camera module 20a may further include a focusing module (not shown). The focusing module is, for example, a focusing motor. The focusing motor may be disposed on the holder 23. In some other examples, the rear-facing camera module 20b may also include structures such as the lens assembly 21, the light filter 22 (Filter), the holder 23 (Holder), the photosensitive element 24, the flexible printed circuit (Flexible Printed Circuit, FPC) 25, and the connector 26.

The light filter 22 may be located between the lens assembly 21 and the holder 23. For example, the light filter 22 may be disposed in a hollow-out region of the holder 23, the photosensitive element 24 is disposed on one end of the flexible printed circuit 25, the photosensitive element 24 is electrically connected to the flexible printed circuit 25, and the holder 23 is provided around an outer edge of the photosensitive element 24.

In this embodiment of this application, the light filter 22 may be an infrared cut filter (IR cut Filter, IRCF). The light filter 22 may filter out infrared light, to prevent the infrared light from entering the lens assembly 21 and affecting imaging.

The photosensitive element 24 may be a charge coupled device (charge coupled device, CCD) or a complementary metal-oxide-semiconductor (complementary metal-oxide-semiconductor, CMOS) phototransistor. The connector 26 is configured to electrically connect the flexible printed circuit 25 to an image signal processing unit (Image Signal Processing, ISP) on the circuit board 40, and electrically connect the image signal processing unit (ISP) to a digital signal processing unit (Digital Signal Processing, DSP). The image processing unit (ISP) and the digital processing unit (DSP) may be separately disposed on the circuit board 40, or the image processing unit (ISP) and the digital processing unit (DSP) may be integrated together and disposed on the circuit board 40. For example, during image shooting, a shutter is opened. Light is transmitted to the photosensitive element 24 through the light filter 22 by using the lens assembly 21. An optical signal is converted into an electrical signal. The photosensitive element 24 transmits, by using the flexible printed circuit 25 and the connector 26, the electrical signal to the ISP for processing. The ISP converts the electrical signal into a digital image signal. The ISP outputs the digital image signal to the DSP for processing. The DSP converts the digital image signal into an image signal in a standard format such as RGB or YUV.

In this embodiment of this application, as shown in FIG. 4, the lens assembly 21 may include a lens tube 212 and a plurality of lenses 211 disposed in the lens tube 212. For example, as shown in FIG. 4, there may be five lenses 211 (that is, 5P), or there may be six lenses 211 (that is, 6P), or there may be seven lenses 211 (for example, there may be seven lenses 211 in the rear-facing camera module 20b). In this embodiment, an example in which the lens assembly 21 includes five lenses 211 is specifically used for descriptions.

For example, as shown in FIG. 5, there are five lenses 211, and the five lenses 211 from an object side to an image side may be sequentially as follows: a first lens 2111, three middle lenses 2112, and a second lens 2113. For example, the first lens 2111 is close to the object side, the second lens 2113 is close to the image side, the object side is a side of a shot object, and the image side is an imaging side. The three middle lenses 2112 are located between the first lens 2111 and the second lens 2113. The three lenses 211 may be a middle lens 2112a, a middle lens 2112b, and a middle lens 2112c. Each lens 211 may be a plastic (Plastic) lens, or may be a glass (Glass) lens. Alternatively, some lenses 211 in the plurality of lenses 211 may be plastic lenses, and some lenses 211 in the plurality of lenses 211 may be glass lenses. A spacer (not shown) may be further disposed between some adjacent lenses 211 to separate two adjacent lenses at a preset distance. A light shield may be disposed on an outer edge of each lens 211, or an outer edge of each lens 211 is coated in black, to shield stray light in the lens tube 212.

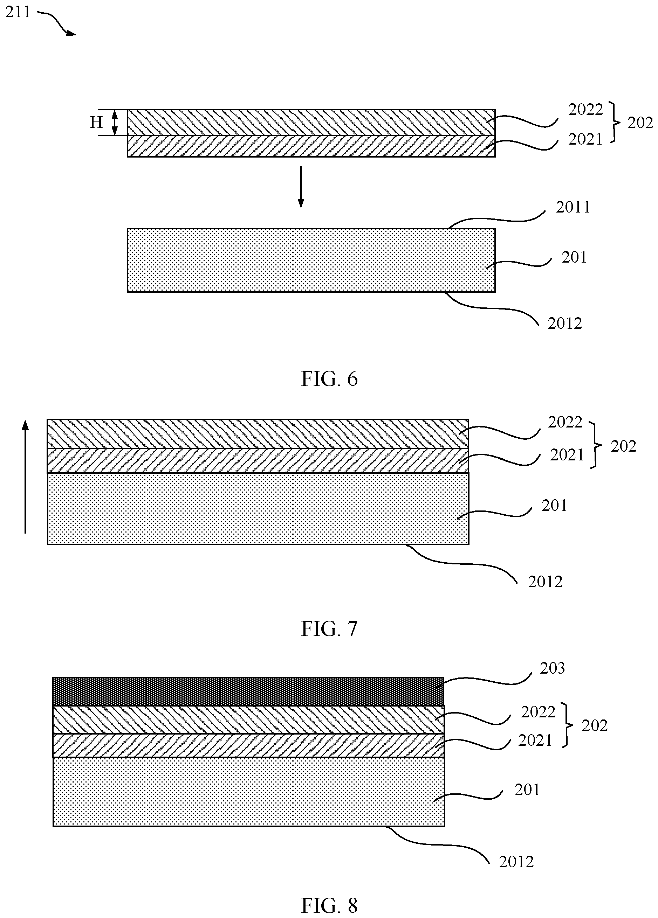

Each lens 211 has a surface facing the object side and a surface facing the image side. In other words, the lens 211 has two surfaces. In this way, after entering the lens tube 212, light is easily reflected on the surface of the lens 211 and surfaces that are of two adjacent lenses 211 and that face each other. When there are a large quantity of lenses 211, there are a larger quantity of reflection surfaces. This increases scenarios in which reflection is formed, and causes more stray light ghosts, which greatly affect imaging quality of the camera module. Therefore, in this embodiment of this application, to reduce reflection of the surface of the lens 211, at least some lenses 211 may be shown in FIG. 6, and each may include a substrate 201. The substrate 201 has a first surface 2011 facing the object side and a second surface 2012 facing the image side. For example, at least some lenses of the first lens 2111, the second lens 2113, and the middles lens 2112 each may include the substrate 201, and the substrate 201 has a positive surface and a negative surface. In addition, at least one low refractive index film layer 202 is disposed on at least one of the first surface 2011 and the second surface 2012. For example, at least one low refractive index film layer 202 may be disposed on the first surface 2011, or at least one low refractive index film layer 202 may be disposed on the second surface 2012, or at least one low refractive index film layer 202 may be disposed on each of the first surface 2011 and the second surface 2012. There may be one or more low refractive index film layers 202. For example, as shown in FIG. 6, two low refractive index film layers 202 are disposed on the first surface 2011 of the lens 211. The two low refractive index film layers 202 are a first low refractive index film layer 2021 and a second low refractive index film layer 2022, and the first low refractive index film layer 2021 and the second low refractive index film layer 2022 are stacked. For example, the first low refractive index film layer 2021 may be located between the second low refractive index film layer 2022 and the substrate 201.

In this embodiment of this application, as shown in FIG. 7, a refractive index of the substrate 201 and a refractive index of the low refractive index film layer 202 gradually decrease in a direction (a direction shown by an arrow in FIG. 7) from the substrate 201 to the low refractive index film layer 202. For example, a refractive index of the second low refractive index film layer 2022 is lower than a refractive index of the first low refractive index film layer 2021, and the refractive index of the first low refractive index film layer 2021 is lower than the refractive index of the substrate 201.

Therefore, in this embodiment of this application, in the lens 211, the substrate 201 has a highest refractive index, and the refractive index of the at least one low refractive index film layer 202 gradually decreases outwards starting from the substrate 201. In this embodiment, refractive indexes of film layers in the lens 211 gradually decrease from inside to outside of the lens 211. In this way, when light is irradiated on the low refractive index film layer 202 of the lens 211, the light first contacts the outermost low refractive index film layer 202, and the outermost low refractive index film layer 202 has a lowest refractive index, for example, a refractive index close to a refractive index of air. In this case, a difference between the refractive index of the outermost low refractive index film layer 202 and the refractive index of air is small. A reflectivity of light on an interface is related to a difference between refractive indexes on two sides of the interface, a larger difference indicates a higher reflectivity, and a smaller difference indicates a lower reflectivity. Therefore, in this embodiment, light is less reflected by the outermost low refractive index film layer 202. In this way, a reflectivity of the lens 211 for incident light is reduced, an anti-glare function is implemented, low reflection and anti-glare of the lens 211 are ensured, and ghosts formed by stray light are reduced.

In addition, in this embodiment of this application, because the refractive indexes of the film layers of the lens still gradually decrease when incident light is obliquely incident, the lens can still maintain a low reflectivity when the incident light is obliquely incident. In addition, in this embodiment, according to a test (for details, refer to Scenario 1 to Scenario 5), the surface of the lens 211 provided in this embodiment of this application has a low reflectivity within a large incident angle range. Therefore, in this embodiment of this application, when an incident angle of the incident light is large, the lens still reduces reflection of the incident light.

In the current technology, when a high refractive index film layer and a low refractive index film layer are alternately stacked, an interference method is used, which is designed for an incident angle. However, when the high refractive index film layer and the low refractive index film layer are alternately stacked to implement the interference method, a thickness of the film layer is very sensitive. In this case, when incident light is obliquely incident, the thickness of the film layer changes, and a reflectivity of the incident light changes greatly at another angle. Therefore, in the current technology, a low surface reflectivity at a large angle cannot be obtained at the same time. Therefore, in comparison with the current technology, in this embodiment, the surface of the lens 211 has a low reflectivity within a large incident angle range, and this ensures a good anti-glare effect of the lens 211 within a large angle range, and improves imaging quality of the camera module.

In this embodiment of this application, a quantity of low refractive index film layers 202 disposed on the first surface 2011 and the second surface 2012 includes but is not limited to two layers shown in FIG. 6. In some other examples, three or four low refractive index film layers 202 may be disposed on at least one of the first surface 2011 and the second surface 2012, and the refractive index of the low refractive index film layer 202 gradually decreases outwards starting from the substrate 201.

According to the lens assembly provided in this embodiment of this application, each lens 211 includes the substrate 201, the substrate 201 has the first surface 2011 facing the object side and the second surface 2012 facing the image side, at least one low refractive index film layer 202 is disposed on at least one of the first surface 2011 and the second surface 2012, and the refractive index of the substrate 201 and the refractive index of the low refractive index film layer 202 gradually decrease in the direction from the substrate 201 to the low refractive index film layer 202. In this way, a reflectivity of the lens 211 for light is reduced, ghosts and glare are not easily formed, and low reflection and anti-glare of the lens 211 are ensured. Therefore, according to the lens assembly provided in this embodiment of this application, the reflectivity of the surface of the lens 211 is reduced, the lens 211 has the low reflectivity within the large incident angle range, the good anti-glare effect of the lens 211 within the large angle range is ensured, and imaging quality of the camera module is improved.

In a possible implementation, in this embodiment, the lens assembly further includes a transparent protective layer 203. At least one low refractive index film layer 202 is located between the protective layer 203 and the substrate 201. For example, as shown in FIG. 8, the protective layer 203 is disposed on the second low refractive index film layer 2022, and the second low refractive index film layer 2022 is located between the protective layer 203 and the first low refractive index film layer 2021. The protective layer 203 protects the outermost low refractive index film layer 202 from being damaged.

In this embodiment of this application, a refractive index of the protective layer 203 may range from 1.4 to 1.6. For example, the refractive index of the protective layer 203 may be 1.5, or the refractive index of the protective layer 203 may be 1.45. Therefore, in this embodiment, the protective layer 203 is also a low refractive index film layer. In this way, a difference between the refractive index of the protective layer 203 and the refractive index of the second low refractive index film layer 2022 and a difference between the refractive index of the protective layer 203 and the refractive index of air are less than 0.6. According to a test (referring to Scenario 5), when the protective layer is disposed, when an incident angle of incident light is 0°, an average surface reflectivity of the surface of the lens 201 in a visible light band is less than 0.3%, and when the incident angle of incident light is 30°, the average surface reflectivity of the surface of the lens 201 in the visible light band is less than 0.5%. In this embodiment, when the protective layer 203 is excessively thick, for example, when the protective layer 203 exceeds 20 nm, the protective layer 203 has great impact on a reflected spectrum. Therefore, in this embodiment of this application, a thickness of the protective layer 203 may range from 1 to 20 nm. In other words, the thickness of the protective layer 203 should not exceed 20 nm. For example, the thickness of the protective layer 203 may be 10 nm, or the thickness of the protective layer 203 may be 12 nm. In this embodiment of this application, the protective layer 203 may be a transparent film layer made of silicon dioxide. Certainly, a material of the protective layer 203 includes but is not limited to silicon dioxide, or may be another transparent low refractive material.

In a possible implementation, in this embodiment of this application, the first low refractive index film layer 2021 and the second low refractive index film layer 2022 are stacked on at least one of the first surface 2011 and the second surface 2012. For example, as shown in FIG. 8, the first low refractive index film layer 2021 and the second low refractive index film layer 2022 are stacked on the first surface 2011, and the first low refractive index film layer 2021 is located between the substrate 201 and the second low refractive index film layer 2022. In addition, the refractive indexes of the substrate 201, the first low refractive index film layer 2021, and the second low refractive index film layer 2022 gradually decrease. For example, the refractive index of the substrate 201 is greater than the refractive index of the first low refractive index film layer 2021, and the refractive index of the first low refractive index film layer 2021 is greater than the refractive index of the second low refractive index film layer 2022.

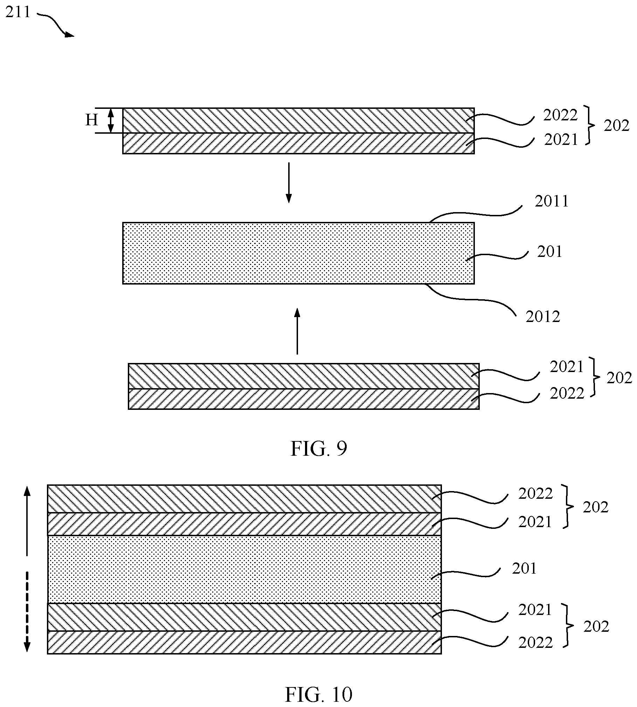

Alternatively, as shown in FIG. 9, the first low refractive index film layer 2021 and the second low refractive index film layer 2022 are stacked on each of the first surface 2011 and the second surface 2012. For example, as shown in FIG. 10, the first low refractive index film layer 2021 and the second low refractive index film layer 2022 are stacked on the first surface 2011, and the refractive indexes of the substrate 201, the first low refractive index film layer 2021, and the second low refractive index film layer 2022 gradually decrease along a direction of a solid line arrow in FIG. 10. The first low refractive index film layer 2021 and the second low refractive index film layer 2022 are stacked on the second surface 2012, the first low refractive index film layer 2021 is located between the substrate 201 and the second low refractive index film layer 2022, and the refractive indexes of the substrate 201, the first low refractive index film layer 2021, and the second low refractive index film layer 2022 gradually decrease along a direction of a dashed arrow in FIG. 10.

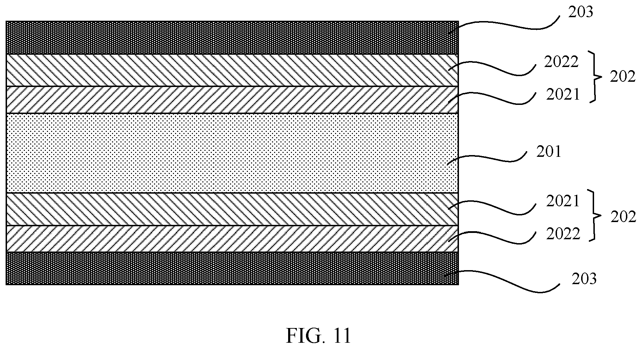

In this embodiment of this application, to protect the two second low refractive index film layers 2022, as shown in FIG. 11, the protective layer 203 is provided on each of the two second low refractive index film layers 2022. For the thickness, the refractive index, and the material of the protective layer 203, refer to the foregoing descriptions.

In this embodiment of this application, the refractive index of the substrate 201 is less than or equal to 1.7. For example, the refractive index of the substrate 201 may be 1.5, or the refractive index of the substrate 201 may be 1.6.

In a possible implementation, a difference between the refractive indexes of the two low refractive index film layers 202 is greater than a difference between the refractive indexes of the substrate 201 and the first low refractive index film layer 2021. For example, the difference between the refractive indexes of the two low refractive index film layers 202 may be 0.3, and the difference between the refractive indexes of the substrate 201 and the first low refractive index film layer 2021 may be 0.2. In this way, the refractive index of the second low refractive index film layer 2022 is small, and is close to the refractive index of air. This ensures that when light passes through the second low refractive index film layer 2022, refraction of the light is small, and reflection of the light is small, so that the second low refractive index film layer 2022 implements low reflection. When light passes through the second low refractive index film layer 2022 and passes through the first low refractive index film layer 2021, reflection of the light increases, so that an optical path is shortened. Certainly, in some other examples, the difference between the refractive indexes of the two low refractive index film layers 202 may alternatively be equal to or less than the difference between the refractive indexes of the substrate 201 and the first low refractive index film layer 2021.

In a possible implementation, the difference between the refractive index of the substrate 201 and the refractive index of the first low refractive index film layer 2021 is less than 0.25. For example, when the refractive index of the substrate 201 may be 1.5, the refractive index of the first low refractive index film layer 2021 may be 1.4. In this way, it can be ensured that the difference between the refractive indexes of the substrate 201 and the first low refractive index film layer 2021 is small when the refractive indexes of the substrate 201 and the first low refractive index film layer 2021 gradually decrease, so that when light passes through the substrate 201 and the first low refractive index film layer 2021, reflection of the light changes slightly.

In a possible implementation, the difference between the refractive indexes of the first low refractive index film layer 2021 and the second low refractive index film layer 2022 is less than 0.4. For example, when the refractive index of the first low refractive index film layer 2021 is 1.4, the refractive index of the second low refractive index film layer 2022 may be 1.1. In this way, the refractive index of the second low refractive index film layer 2022 is close to the refractive index of air. This ensures that when light passes through the second low refractive index film layer 2022, refraction of the light is small, and reflection of the light is small, so that the second low refractive index film layer 2022 implements low reflection.

In a possible implementation, the substrate 201 may be a glass substrate, or may be a plastic substrate, or may be a resin substrate, so that the formed lens 211 may be a glass (Glass) lens, or may be a plastic (Plastic) lens, or may be a resin lens.

In a possible implementation, the first low refractive index film layer 2021 and the second low refractive index film layer 2022 are made of silicon dioxide or porous silicon oxide. For example, the first low refractive index film layer 2021 may be a low refractive index film layer 202 made of silicon dioxide, or the first low refractive index film layer 2021 may be a low refractive index film layer 202 made of porous silicon oxide. The second low refractive index film layer 2022 may be a low refractive index film layer 202 made of silicon dioxide, or the second low refractive index film layer 2022 may be a low refractive index film layer 202 made of porous silicon oxide. It should be noted that, in this embodiment, materials of the first low refractive index film layer 2021 and the second low refractive index film layer 2022 include but is not limited to silicon dioxide or porous silicon oxide, and the first low refractive index film layer 2021 and the second low refractive index film layer 2022 may alternatively be film layers made of another low refractive index material.

In a possible implementation, a thickness of each low refractive index film layer 202 ranges from 80 to 150 nm. For example, a thickness of the first low refractive index film layer 2021 may be 90 nm, and a thickness H (shown in FIG. 9 and FIG. 6) of the second low refractive index film layer 2022 may be 100 nm. In this way, the thickness H of the second low refractive index film layer 2022 is greater than the thickness of the first low refractive index film layer 2021. Alternatively, the thickness of the first low refractive index film layer 2021 may be 140 nm, and the thickness H of the second low refractive index film layer 2022 may be 120 nm. In this way, the thickness H of the second low refractive index film layer 2022 is less than the thickness of the first low refractive index film layer 2021. Alternatively, the thickness H of the first low refractive index film layer 2021 may be 100 nm, and the thickness H of the second low refractive index film layer 2022 may also be 100 nm. In this way, the thickness H of the second low refractive index film layer 2022 is equal to the thickness of the first low refractive index film layer 2021.

In this embodiment of this application, a total thickness of the low refractive index film layers 202 disposed on the first surface 2011 or the second surface 2012 is less than 300 nm. For example, when the first low refractive index film layer 2021 and the second low refractive index film layer 2022 are disposed on the first surface 2011, a sum of the thicknesses of the first low refractive index film layer 2021 and the second low refractive index film layer 2022 is less than 300 nm. For example, the sum of thicknesses of the first low refractive index film layer 2021 and the second low refractive index film layer 2022 may be 260 nm or 280 nm. When three low refractive index film layers 202 are disposed on the first surface 2011, a sum of thicknesses of the three low refractive index film layers 202 is less than 300 nm.

In a possible implementation, the plurality of lenses 211 include a first lens 2111 close to the object side, a second lens 2113 close to the image side, and at least one middle lens 2112 located between the first lens 2111 and the second lens 2113. For example, there may be one, three (as shown in FIG. 5), or more than four middle lenses 2112. In this embodiment, for example, there are three middle lenses 2112. For example, the three middle lenses 2112 are a middle lens 2112a, a middle lens 2112b, and a middle lens 2112c.

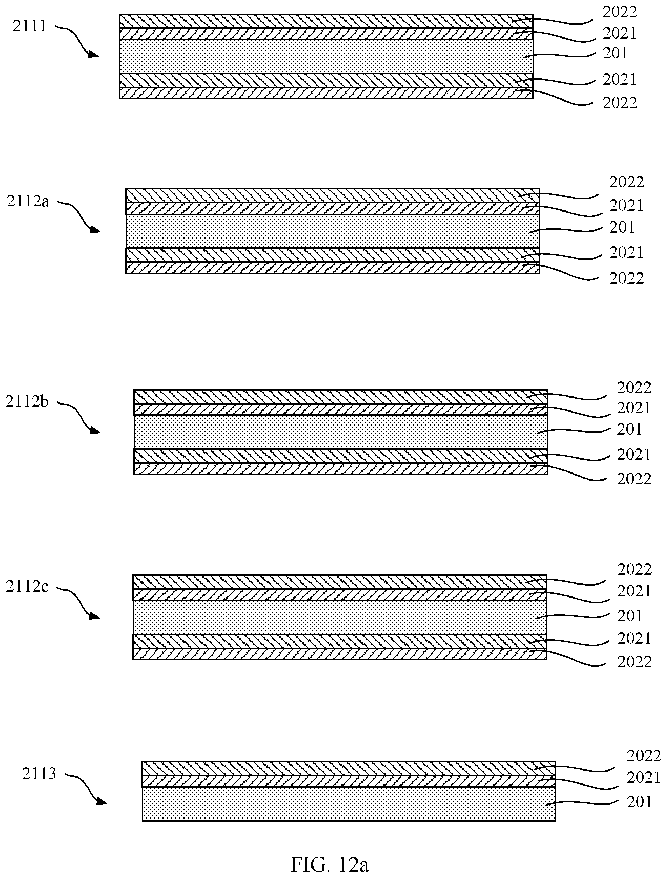

In this embodiment of this application, to reduce a plurality of times of reflection between two opposite surfaces of adjacent lenses 211, for example, a plurality of times of reflection between the second surface 2012 of the first lens 2111 and the first surface 2011 of the middle lens 2112a, at least two low refractive index film layers 202 are disposed on each of the first surface 2011 and the second surface 2012 of the first lens 2111, the first surface 2011 of the second lens 2113, and the first surface 2011 and the second surface 2012 of each middle lens 2112. For example, as shown in FIG. 12a, the first low refractive index film layer 2021 and the second low refractive index film layer 2022 are stacked on each of the first surface 2011 and the second surface 2012 of the first lens 2111. The first low refractive index film layer 2021 and the second low refractive index film layer 2022 are stacked on each of the first surface 2011 and the second surface 2012 of each of the middle lens 2112a, the middle lens 2112b, and the middle lens 2112c. The first low refractive index film layer 2021 and the second low refractive index film layer 2022 are stacked on the first surface 2011 of the second lens 2113. In this way, in the lens assembly, because the low refractive index film layers 202 are disposed on the first surface 2011 of the first lens 2111 and between the adjacent lenses 211, a reflectivity of each surface of the lens 211 is reduced. Therefore, a phenomenon of a plurality of times of reflection is not likely to occur between the two adjacent lenses, to implement anti-glare.

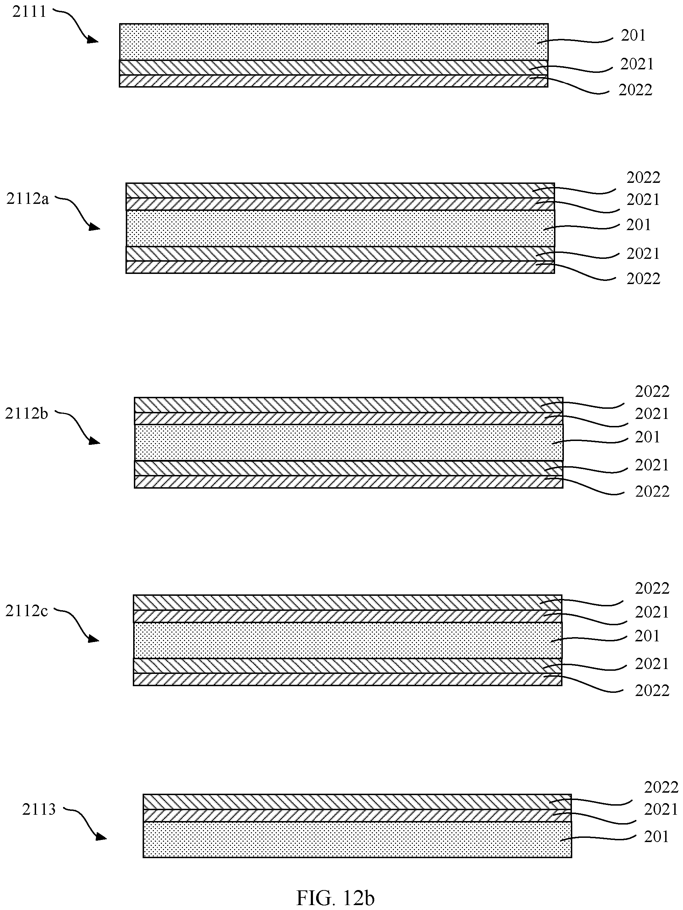

Certainly, in some other examples, as shown in FIG. 12b, the first low refractive index film layer 2021 and the second low refractive index film layer 2022 may be stacked on each of the second surface 2012 of the first lens 2111, the first surface 2011 and the second surface 2012 of each of the middle lens 2112a, the middle lens 2112b, and the middle lens 2112c, and the first surface 2011 of the second lens 2113. In this way, reflection between surfaces of adjacent lenses 211 is reduced.

Alternatively, the first low refractive index film layer 2021 and the second low refractive index film layer 2022 may be stacked on each of the first surface 2011 of the first lens 2111, the first surface 2011 and the second surface 2012 of each of the middle lens 2112a, the middle lens 2112b, and the middle lens 2112c, and the first surface 2011 of the second lens 2113. In this way, all surfaces that are of the lenses 211 and that face the object side are low refractive surfaces, and when light passes through these surfaces, reflection of the light decreases.

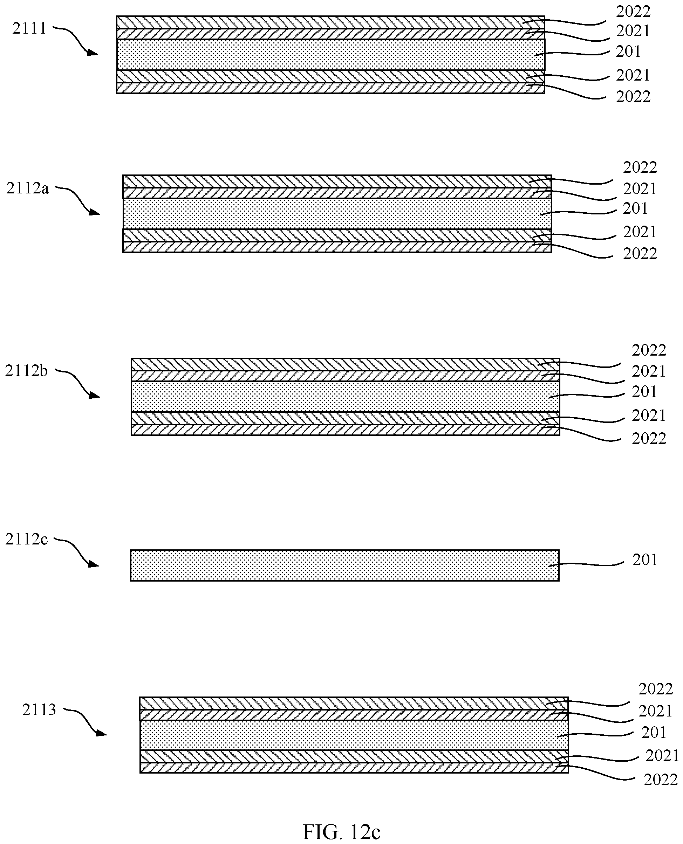

It should be noted that a case in which the low refractive index film layer is disposed on each surface of the plurality of lenses 211 in the lens assembly 21 includes but is not limited to that shown in FIG. 12a and FIG. 12b. For example, the low refractive index film layer 202 may be disposed on each of the first surface 2011 and the second surface 2022 of each lens. Alternatively, because of a surface type (for example, a convex surface or a concave surface) of the plurality of lenses 211, stray light of one or more lenses is obvious. In this case, to save costs and improve efficiency, the low refractive index film layer 202 may be disposed on a lens that is in the plurality of lenses 211 and on which stray light is obvious, to optimize a surface of the lens. For example, as shown in FIG. 12c, no low refractive index film layer 202 is disposed on the middle lens 2112c, and the low refractive index film layers 202 are disposed on both positive and negative surfaces of the other four lenses. In this embodiment, because a high and low refractive index coating process is mature, a high and low refractive index film layer may be disposed on another lens on which no low refractive index film layer 202 is disposed, and the low refractive index film layer 202 is disposed on a surface of each of one or more other lenses.

Based on the foregoing descriptions, in the following scenarios, a reflectivity generated by the formed lens 211 when light is incident at different incident angles is tested. Details are as follows.

### Scenario 1

In this scenario, the substrate 201 may be a glass substrate. Glass with a glass specification of BK7 may be used as the glass substrate. BK7 is a type of common borosilicate crown glass (Borosilicate Crown Glass). To be specific, in this scenario, the BK7 glass is used as the substrate 201, and the first low refractive index film layer 2021 and the second low refractive index film layer 2022 are stacked on the first surface 2011 of the substrate 201 to form the lens 211 shown in FIG. 7. Parameters of each film layer of the lens 211 are shown in Table 1.

| | Material | Refractive index | Thickness |
|---|---|---|---|
| Substrate | BK7 glass | 1.52 | - |
| First low refractive index film layer | Porous silicon oxide | 1.43 | 90 nm |
| Second low refractive index film layer | Porous silicon oxide | 1.19 | 112 nm |

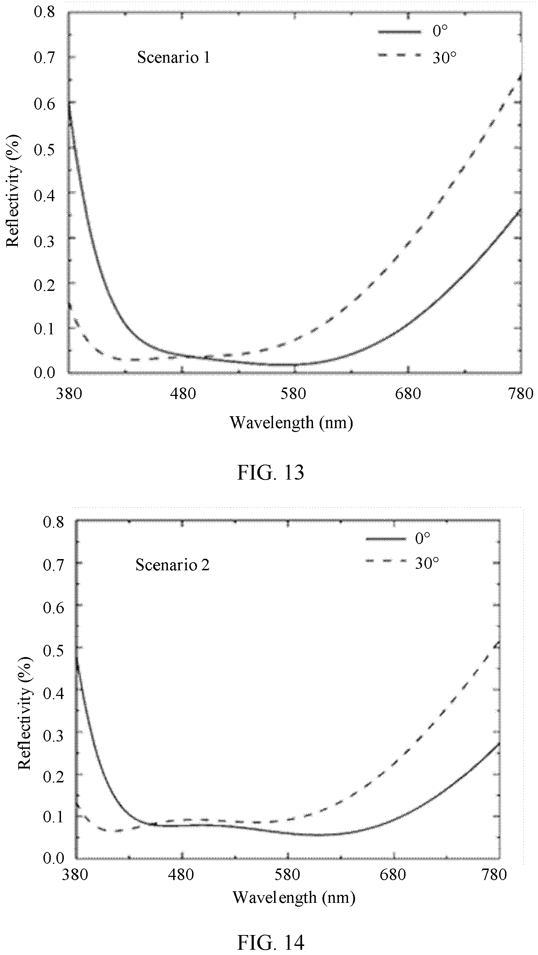

As shown in Table 1, the first low refractive index film layer 2021 is made of porous silicon oxide, and the first low refractive index film layer 2021 is made of porous silicon oxide. The refractive index (587 nm) of the substrate 201 is 1.52, the refractive index of the first low refractive index film layer 2021 is 1.43, and the refractive index of the second low refractive index film layer 2022 is 1.19. The thickness of the first low refractive index film layer 2021 is 90 nm, and the thickness of the second low refractive index film layer 2022 is 112 nm. The reflectivity of the lens 211 is tested separately at an incident angle of 0° and an incident angle of 30° of light. A test result is shown in FIG. 13. When the incident angle is 0°, an average reflectivity of a visible light band 380 to 780 nm is 0.143%. When the incident angle is 30°, the average reflectivity of the visible light band 380 to 780 nm is 0.201%. Therefore, the lens 211 provided in Scenario 1 simultaneously obtains, in a visible light wavelength range of 380 to 780 nm, the average surface reflectivity at the incident angle of 0°, which is less than 0.3%, and the average surface reflectivity at the incident angle of 30°, which is less than 0.5%. Therefore, when the first low refractive index film layer 2021 and the second low refractive index film layer 2022 are stacked on the substrate 201, a good low-reflection anti-glare effect is achieved within a ±30° field of view in the visible light band. However, in the current technology, a low surface reflectivity at a large angle cannot be obtained. Therefore, in comparison with the current technology, in this embodiment of this application, the surface of the lens 211 has the low reflectivity within the large incident angle range. This ensures the good anti-glare effect of the lens 211 within the large angle range, and improves imaging quality of the camera module.

### Scenario 2

In this scenario, the substrate 201 may be a plastic substrate, for example, may be a plastic substrate made of a cycloolefin copolymer (APEL). The first low refractive index film layer 2021 and the second low refractive index film layer 2022 are stacked on the first surface 2011 of the substrate 201 to form the lens 211 shown in FIG. 7. Parameters of each film layer of the lens 211 are shown in Table 2.

| | Material | Refractive index | Thickness |
|---|---|---|---|
| Substrate | Plastic (PS) | 1.54 | - |
| First low refractive index film layer | Porous silicon oxide | 1.43 | 90 nm |
| Second low refractive index film layer | Porous silicon oxide | 1.19 | 112 nm |

As shown in Table 2, the first low refractive index film layer 2021 is made of porous silicon oxide, and the second low refractive index film layer 2022 is made of porous silicon oxide. The refractive index (587 nm) of the substrate 201 is 1.54, the refractive index of the first low refractive index film layer 2021 is 1.43, and the refractive index of the second low refractive index film layer 2022 is 1.19. The thickness of the first low refractive index film layer 2021 is 90 nm, and the thickness of the second low refractive index film layer 2022 is 112 nm. The reflectivity of the lens 211 is tested separately at an incident angle of 0° and an incident angle of 30° of light. A test result is shown in FIG. 14. When the incident angle is 0°, an average reflectivity of a visible light band 380 to 780 nm is 0.117%. When the incident angle is 30°, the average reflectivity of the visible light band 380 to 780 nm is 0.169%. Therefore, the lens 211 provided in Scenario 1 simultaneously obtains, in a visible light wavelength range of 380 to 780 nm, the average surface reflectivity at the incident angle of 0°, which is less than 0.3%, and the average surface reflectivity at the incident angle of 30°, which is less than 0.5%. Therefore, when the first low refractive index film layer 2021 and the second low refractive index film layer 2022 are stacked on the substrate 201, a good low-reflection anti-glare effect is achieved within a ±30° field of view in the visible light band. In addition, in comparison with Scenario 1, in this scenario, after the refractive index of the substrate 201 increases, the reflectivity of the lens 211 at the incident angle of 0° and the reflectivity of the lens 211 at the incident angle of 30° are less than the reflectivity of the lens 211 at the incident angle of 0° and the reflectivity of the lens 211 at the incident angle of 30° in Scenario 1. Therefore, for materials of the substrate 201 with different refractive indexes, when the refractive index of the substrate 201 increases, the reflectivity of the lens 211 in the ±30° field of view decreases.

### Scenario 3

In comparison with Scenario 2, in this scenario, on the basis of Scenario 2, the thickness of the first low refractive index film layer 2021 and the thickness of the second low refractive index film layer 2022 are separately increased or decreased by 5 nm, which are specifically shown in Table 3.

| | Material | Refractive index | Thickness |
|---|---|---|---|
| Substrate | Plastic (PS) | 1.54 | - |
| First low refractive index | Porous silicon | 1.43 | 85 & 95 |
| film layer | oxide | | nm |
| Second low refractive index film layer | Porous silicon oxide | 1.19 | 107 & 117 nm |

As shown in Table 3, the first low refractive index film layer 2021 is made of porous silicon oxide, and the second low refractive index film layer 2022 is made of porous silicon oxide. The refractive index (587 nm) of the substrate 201 is 1.54, the refractive index of the first low refractive index film layer 2021 is 1.43, and the refractive index of the second low refractive index film layer 2022 is 1.19. The thickness of the first low refractive index film layer 2021 is 85 nm, and the thickness of the second low refractive index film layer 2022 is 107 nm. Alternatively, the thickness of the first low refractive index film layer 2021 is 95 nm, and the thickness of the second low refractive index film layer 2022 is 117 nm.

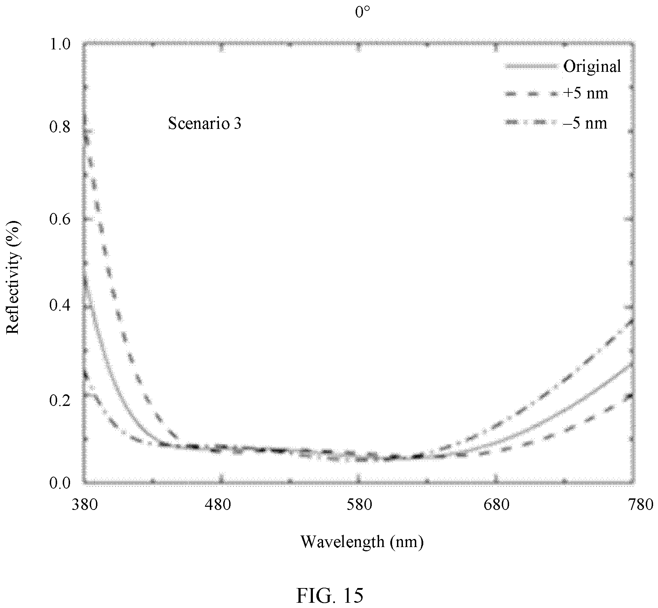

Reflectivities of the lenses 211 with different thicknesses are tested separately at an incident angle of 0° and an incident angle of 30° of light. When the incident angle is 0°, a test result is shown in FIG. 15. Based on the thickness of the first low refractive index film layer 2021 and the thickness of the second low refractive index film layer 2022 in Scenario 2, when the thickness of each of the first low refractive index film layer 2021 and the second low refractive index film layer 2022 is increased by 5 nm, an average reflectivity of a visible light band of 380 to 780 nm is 0.131%. Based on the thickness of the first low refractive index film layer 2021 and the thickness of the second low refractive index film layer 2022 in Scenario 2, when the thickness of each of the first low refractive index film layer 2021 and the second low refractive index film layer 2022 is decreased by 5 nm, the average reflectivity of the visible light band of 380 to 780 nm is 0.124%. An original reflectivity curve in FIG. 15 is a reflectivity curve at the incident angle of 0° in FIG. 14. In other words, the original reflectivity curve in FIG. 15 is the reflectivity curve of the lens at the incident angle of 0° in Scenario 2. According to the descriptions in Scenario 2, when the thickness of the first low refractive index film layer 2021 and the thickness of the second low refractive index film layer 2022 are not increased or decreased by 5 nm, and the incident angle is 0°, the average reflectivity of the visible light band of 380 to 780 nm is 0.117%.

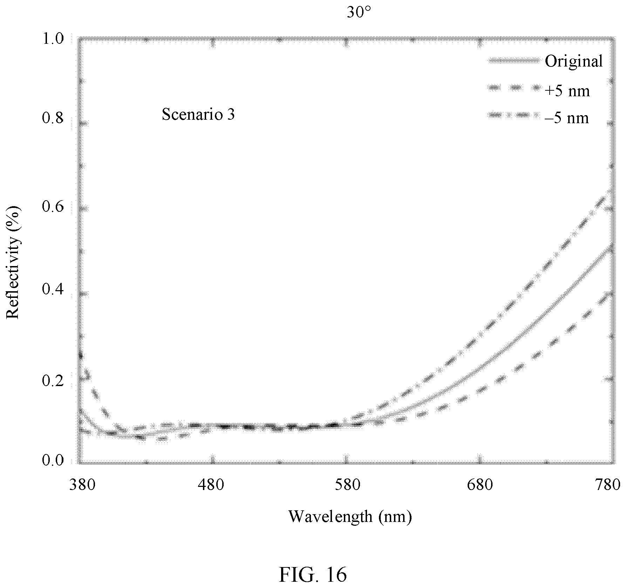

When the incident angle is 30°, as shown in FIG. 16, based on the thickness of the first low refractive index film layer 2021 and the thickness of the second low refractive index film layer 2022 in Scenario 2, when the thickness of each of the first low refractive index film layer 2021 and the second low refractive index film layer 2022 is increased by 5 nm, the average reflectivity of the visible light band of 380 to 780 nm is 0.146%. Based on the thickness of the first low refractive index film layer 2021 and the thickness of the second low refractive index film layer 2022 in Scenario 2, when the thickness of each of the first low refractive index film layer 2021 and the second low refractive index film layer 2022 is decreased by 5 nm, the average reflectivity of the visible light band of 380 to 780 nm is 0.207%. The original reflectivity curve in FIG. 16 is the reflectivity curve at the incident angle of 30° in FIG. 14. In other words, the original reflectivity curve in FIG. 16 is the reflectivity curve of the lens at the incident angle of 30° in Scenario 2. According to the descriptions in Scenario 2, when the thickness of the first low refractive index film layer 2021 and the thickness of the second low refractive index film layer 2022 are not increased or decreased by 5 nm, and the incident angle is 30°, the average reflectivity of the visible light band of 380 to 780 nm is 0.169%.

Therefore, the lens 211 provided in Scenario 3 simultaneously obtains, in a visible light wavelength range of 380 to 780 nm, the average surface reflectivity at the incident angle of 0°, which is less than 0.3%, and the average surface reflectivity at the incident angle of 30°, which is less than 0.5%. Therefore, when the first low refractive index film layer 2021 and the second low refractive index film layer 2022 are stacked on the substrate 201, if the thicknesses of the first low refractive index film layer 2021 and the second low refractive index film layer 2022 are within a tolerance of ±5 nm, the good anti-glare effect can still be achieved in a ±30° field of view in the visible light band.

In addition, in comparison with Scenario 2, when the thickness of each of the first low refractive index film layer 2021 and the second low refractive index film layer 2022 is increased or decreased by 5 nm, the average surface reflectivity of the lens 211 at the incident angle of 0° is greater than the average surface reflectivity of the lens 211 at the incident angle of 0° in Scenario 2. When the thickness of each of the first low refractive index film layer 2021 and the second low refractive index film layer 2022 is increased by 5 nm, the average surface reflectivity of the lens 211 at the incident angle of 30° is less than the average surface reflectivity of the lens 211 at the incident angle of 30° in Scenario 2. However, when the thickness of each of the first low refractive index film layer 2021 and the second low refractive index film layer 2022 is decreased by 5 nm, the average surface reflectivity of the lens 211 at the incident angle of 30° is greater than the average surface reflectivity of the lens 211 at the incident angle of 30° in Scenario 2. Therefore, when the thickness of the low refractive index film layer 202 is increased, a reflectivity at a large incident angle decreases, when the thickness of the low refractive index film layer 202 is decreased, the reflectivity at the large incident angle increases, and when the thickness of the low refractive index film layer 202 is increased or decreased, the average surface reflectivity of the lens 211 at the incident angle of 0° increases.

### Scenario 4

In this scenario, the substrate 201 may be made of polystyrene (Polystyrene, PS for short), and the first low refractive index film layer 2021 and the second low refractive index film layer 2022 are stacked on the first surface 2011 of the substrate 201 to form the lens 211 shown in FIG. 7. Parameters of each film layer of the lens 211 are shown in Table 4.

| | Material | Refractive index | Thickness |
|---|---|---|---|
| Substrate | Polystyrene (PS) | 1.59 | - |
| First low refractive index film layer | SiO₂ | 1.47 | 88 nm |
| Second low refractive index film layer | Porous silicon oxide | 1.19 | 112 nm |

As shown in Table 4, the first low refractive index film layer 2021 is made of SiO₂, and the second low refractive index film layer 2022 is made of porous silicon oxide. The refractive index (587 nm) of the substrate 201 is 1.59, the refractive index of the first low refractive index film layer 2021 is 1.47, and the refractive index of the second low refractive index film layer 2022 is 1.19. The thickness of the first low refractive index film layer 2021 is 88 nm, and the thickness of the second low refractive index film layer 2022 is 112 nm.

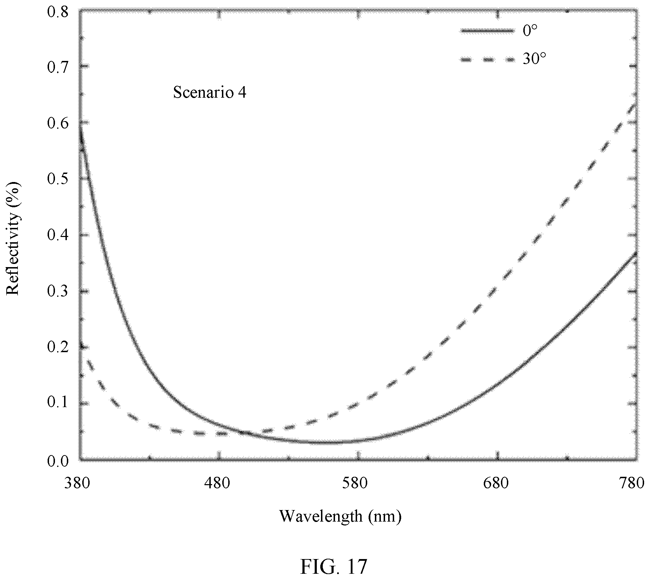

A reflectivity of the lens 211 is tested separately at an incident angle of 0° and an incident angle of 30° of light. A test result is shown in FIG. 17. When the incident angle is 0°, an average reflectivity of a visible light band 380 to 780 nm is 0.119%. When the incident angle is 30°, the average reflectivity of the visible light band 380 to 780 nm is 0.181%. Therefore, in a visible light wavelength range of 380 to 780 nm, the average surface reflectivity at the incident angle of 0°, which is less than 0.3%, and the average surface reflectivity at the incident angle of 30°, which is less than 0.5%, are simultaneously obtained. When the first low refractive index film layer 2021 and the second low refractive index film layer 2022 are stacked on the substrate 201, materials of the substrate 201 with different refractive indexes all achieve a good low-reflection anti-glare effect in a ±30° field of view range in the visible light band.

### Scenario 5

In this scenario, the first low refractive index film layer 2021 and the second low refractive index film layer 2022 are stacked on the first surface 2011 of the substrate 201, and the protective layer 203 is disposed on the second low refractive index film layer 2022 to form the lens 211 shown in FIG. 8. Parameters of film layers of the lens 211 are shown in Table 5.

| | Material | Refractive index | Thickness |
|---|---|---|---|
| Substrate | Polystyrene (PS) | 1.59 | - |
| First low refractive index film layer | SiO₂ | 1.47 | 91 nm |
| Second low refractive index film layer | Porous silicon oxide | 1.19 | 85 nm |
| Protective layer | SiO₂ | 1.43 | 10 nm |

As shown in Table 5, the substrate 201 is made of polystyrene (PS), the first low refractive index film layer 2021 is made of SiO₂, the second low refractive index film layer 2022 is made of porous silicon oxide, and the protective layer 203 is made of SiO₂. The refractive index (587 nm) of the substrate 201 is 1.59, the refractive index of the first low refractive index film layer 2021 is 1.47, the refractive index of the second low refractive index film layer 2022 is 1.19, and the refractive index of the protective layer 203 is 1.43. The thickness of the first low refractive index film layer 2021 is 88 nm, the thickness of the second low refractive index film layer 2022 is 112 nm, and the thickness of the protective layer 203 is 10 nm.

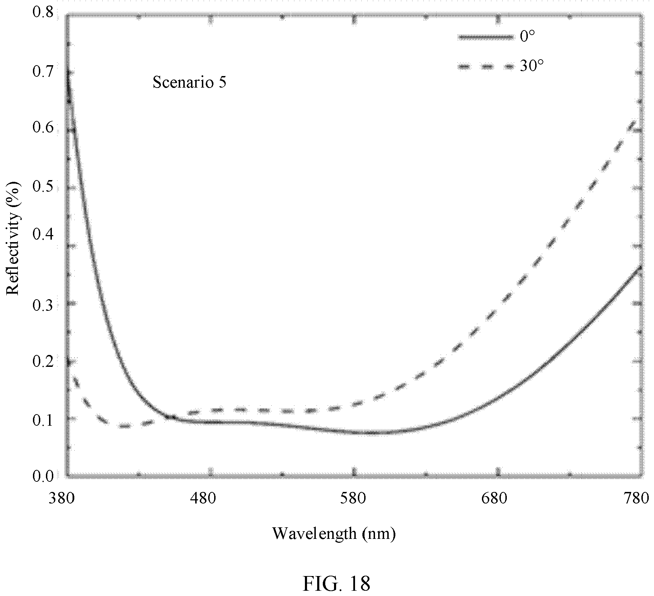

A reflectivity of the lens 211 is tested separately at an incident angle of 0° and an incident angle of 30° of light. A test result is shown in FIG. 18. When the incident angle is 0°, an average reflectivity of a visible light band 380 to 780 nm is 0.161%. When the incident angle is 30°, the average reflectivity of the visible light band 380 to 780 nm is 0.218%. Therefore, when the protective layer 203 is added, in a visible light wavelength range of 380 to 780 nm, the average surface reflectivity at the incident angle of 0°, which is less than 0.3%, and the average surface reflectivity at the incident angle of 30°, which is less than 0.5%, are simultaneously obtained. Therefore, a good low-reflection anti-glare effect is still achieved within a ±30° field of view range in the visible light band.

In addition, in comparison with Scenario 4, when the protective layer 203 is disposed on the second low refractive index film layer 2022, the average reflectivity (0.161%) of the lens 211 at the incident angle of 0° is greater than the average reflectivity (0.119%) of the lens 211 at the incident angle of 0° in Scenario 4, and the average reflectivity (0.218%) of the lens 211 at the incident angle of 30° is greater than the average reflectivity (0.181%) of the lens 211 at the incident angle of 0° in Scenario 4. Therefore, when the protective layer 203 is added, the low refractive index film layer 202 is protected. However, the refractive index of the protective layer 203 is greater than the refractive index of the second low refractive index film layer 2022. Therefore, when light is incident on the lens 211, the light is first irradiated on the protective layer 203, and because the refractive index of the protective layer 203 is greater than the refractive index of the second low refractive index film layer 2022, reflection on the protective layer 203 is greater than reflection on the second low refractive index film layer 2022. As a result, the average reflectivity in this scenario is greater than the average reflectivity in Scenario 4. However, when the protective layer 203 is added, it can still be ensured that the average surface reflectivity is less than 0.3% at the incident angle of 0°, and the average surface reflectivity is less than 0.5% at the incident angle of 30°. Therefore, the good low-reflection anti-glare effect is still achieved within the ±30° field of view range in the visible light band.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood according to a specific situation.

In the specification, claims, and accompanying drawings of embodiments of this application, the terms "first", "second", "third", "fourth", and so on (if existent) are intended to distinguish between similar objects but do not necessarily indicate a specific order or sequence.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A lens assembly, comprising:
a lens tube and a plurality of lenses disposed in the lens tube, wherein
at least some of the lenses each comprise a substrate, the substrate has a first surface facing an object side and a second surface facing an image side, at least one low refractive index film layer is disposed on at least one of the first surface and the second surface, and a refractive index of the substrate and a refractive index of the low refractive index film layer gradually decrease in a direction from the substrate to the low refractive index film layer.

2. The lens assembly according to claim 1, wherein a first low refractive index film layer and a second low refractive index film layer are stacked on at least one of the first surface and the second surface, the first low refractive index film layer is located between the substrate and the second low refractive index film layer, and refractive indexes of the substrate, the first low refractive index film layer, and the second low refractive index film layer gradually decrease.

3. The lens assembly according to claim 2, wherein the first low refractive index film layer and the second low refractive index film layer are stacked on each of the first surface and the second surface, the first low refractive index film layer is located between the substrate and the second low refractive index film layer, and the refractive indexes of the substrate, the first low refractive index film layer, and the second low refractive index film layer gradually decrease.

4. The lens assembly according to claim 3, wherein a difference between the refractive indexes of the first low refractive index film layer and the second low refractive index film layer is greater than a difference between the refractive index of the substrate and the refractive index of the first low refractive index film layer.

5. The lens assembly according to claim 4, wherein
the difference between the refractive index of the substrate and the refractive index of the first low refractive index film layer is less than 0.25, and the difference between the refractive indexes of the first low refractive index film layer and the second low refractive index film layer is less than 0.4.

6. The lens assembly according to any one of claims 2 to 5, wherein the substrate is a glass substrate, a plastic substrate, or a resin substrate, and the refractive index of the substrate is less than or equal to 1.7.

7. The lens assembly according to any one of claims 2 to 5, wherein the first low refractive index film layer and the second low refractive index film layer are made of silicon dioxide or porous silicon oxide.

8. The lens assembly according to any one of claims 1 to 7, wherein a thickness of each of the low refractive index film layers ranges from 80 to 150 nm, and a total thickness of the low refractive index film layers disposed on the first surface or the second surface is less than 300 nm.

9. The lens assembly according to any one of claims 1 to 8, wherein the plurality of lenses comprises a first lens close to the object side, a second lens close to the image side, and at least one middle lens located between the first lens and the second lens, at least two of the low refractive index film layers are disposed on the first surface or the second surface of each of at least some of the first lens, the middle lens, and the second lens, or at least two of the low refractive index film layers are disposed on each of the first surface and the second surface of each of at least some of the first lens, the middle lens, and the second lens.

10. The lens assembly according to any one of claims 1 to 9, further comprising a transparent protective layer, wherein the at least one low refractive index film layer is located between the protective layer and the substrate.

11. The lens assembly according to claim 10, wherein a refractive index of the protective layer ranges from 1.4 to 1.6.

12. The lens assembly according to claim 10, wherein a thickness of the protective layer ranges from 1 to 20 nm, and the protective layer is a film layer made of silicon dioxide.

13. A camera module, comprises at least the lens assembly according to any one of claims 1 to 12, a holder, a photosensitive element, and a flexible printed circuit, wherein the holder is located between the lens assembly and the flexible printed circuit, and the photosensitive element is located at one end that is of the flexible printed circuit and opposite to the lens assembly.

14. An electronic device, comprising at least a display, a rear cover, and at least one camera module according to claim 13, wherein the camera module faces the display or the rear cover.

15. The electronic device according to claim 14, wherein the camera module is a front-facing camera module, or the camera module is a rear-facing camera module, or there are at least two camera modules, one camera module is a rear-facing camera module, and the other camera module is a front-facing camera module.
